# EUROPEAN PATENT APPLICATION

(11) **EP 3 584 674 A1**
(43) Date of publication of application: **25.12.2019**
(21) Application number: 19150715.1
(22) Date of filing: 08.01.2019
(51) Int. Cl.: G06F 1/26

(54) **CONTROL METHOD OF REDUNDANT POWER SUPPLY DEVICE**

(30) Priority: 20.06.2018 TW 10721084
(71) Applicant: Giga-Byte Technology Co., Ltd., New Taipei City 231 (TW)
(72) Inventor: WANG, Wei-Cheng, New Taipei City (TW); CHANG, Chia-Cheng, New Taipei City (TW)
(74) Representative: Grünecker Patent- und Rechtsanwälte PartG mbB

(57) **Abstract**

A control method is applied to a redundant power supply device 10, with the redundant power supply device 10 is connected to a power demanding device 30 and comprises a plurality of power supply units 101a and 101b, with said control method comprising: detecting and calculating a required electrical power value of the power demanding device 30, and determining an operation quantity of the power supply units 101a and 101b according to the required electrical power value and a plurality of efficient operation data for generating a control command, and selectively controlling the redundant power supply device 10 according to the control command. Additionally, wherein the plurality of efficient operation data indicates a relationship between supplied power of the redundant power supply device 10 and the operation quantity of the power supply units 101a and 101b, and the relationship is associated with a power supply efficiency of the redundant power supply device 10.

## Description

### CROSS-REFERENCE TO RELATED APPLICATIONS

### This non-provisional application claims priority under 35 U.S.C. § 119(a) on Patent Application No(s). 107121084 filed in Taiwan, R.O.C. on June 20th, 2018, the entire contents of which are hereby incorporated by reference.

### Technical Field

The disclosure relates to a control method of a power supply device, more particularly to a control method of a redundant power supply device.

### Background

Conventionally, a power demanding device usually includes two or more power supply units in the server or other high level computer, and this device is called redundant power supply device. Each of the power supply units is able to supply the power independently to the server. In the case that one of the power supply units has a breakdown, other power supply units keep operating to supply power to the server; hence, the server is able to operate normally.

In a normal condition, the quantity of the power supply units included in the redundant power supply device disposed with the server is determined according to the largest required power value of the server. For example, when the largest required power value of the server is the same as the total power supplied by N power supply units, the controller selects the redundant power supply device including N+1 power supply units to execute the power supplement for the server. In addition, the N power supply units supply power for the server evenly based on the currently required power of the server.

### SUMMARY

According to a control method of a redundant power supply device in an embodiment for this disclosure, wherein the applied redundant power supply device is connected to a power demanding device, and the redundant power supply device comprises a plurality of power supply units. Said control method comprises: detecting and calculating a required electrical power value of the power demanding device, and determining the value of an operation quantity of the power supply units according to the required electrical power value and the efficient operation data for generating a control command. In addition, the plurality of efficient operation data indicates a relationship between supplied power of the redundant power supply device and the operation quantity of the power supply units, and the relationship is associated with a power supply efficiency of the redundant power supply.

According to another embodiment for a control method applied to a redundant power supply device, wherein the applied redundant power supply device with N power supply units, and said redundant power supply device connects with a power demanding device. Each of the power supply units comprises a largest operation power of W watts. Said control method comprises detecting and calculating a required electrical power value of the power demanding device, and generating a control command according to an operation quantity of the power supply units, with said operation quantity determined based on the required electrical power value and a switching threshold; additionally, selectively controlling the redundant power supply device based on the control command. Moreover, wherein the switching threshold is between M times of W watt and (M+1) times of W watt, and the value of the operation quantity changes from (M+1) to (M+2) when the required electrical power value is changed from less than the switching threshold to more than the switching threshold, wherein M is a non-negative integer.

### BRIEF DESCRIPTION OF THE DRAWINGS

The present disclosure will become more fully understood from the detailed description given hereinbelow and the accompanying drawings which are given by way of illustration only and thus are not limitative of the present disclosure and wherein:
FIG. 1 is the system structure schematic of the control method applied to the redundant power supply device for an embodiment based on this disclosure.
FIG. 2 is the flowchart of the control method for the redundant power supply device for an embodiment based on this disclosure.
FIG. 3 is the detailed flowchart of the control method for the redundant power supply device for an embodiment based on this disclosure.
FIG. 4 is the detailed flowchart of the control method for the redundant power supply device for another embodiment based on this disclosure.
FIG. 5 is the schematic of the efficient operation data for an embodiment based on this disclosure.
FIG. 6 is the detailed flowchart of the control method for the redundant power supply device for an embodiment based on this disclosure.
FIG. 7 is the flowchart of the control method for the redundant power supply device for another embodiment based on this disclosure.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

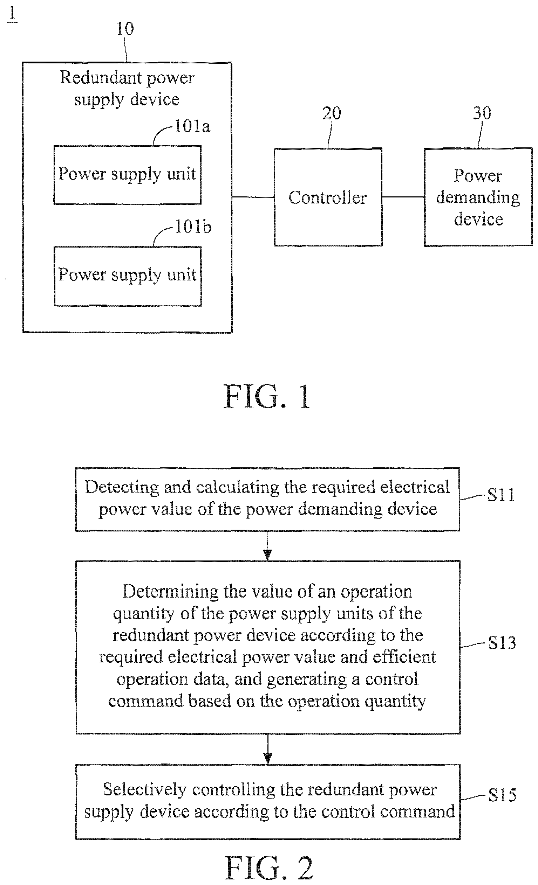

Please refer to FIG. 1 and FIG. 2, wherein FIG. 1 is the system structure schematic of the control method applied to the redundant power supply device in an embodiment based on this disclosure. FIG. 1 schematically shows the method applied to the redundant power supply device controlling system 1 in an embodiment based on this disclosure. First of all, the following description describes the structure of the redundant power supply device controlling system 1, and the detailed control method is illustrated later. As FIG. 1 shows, the redundant power supply device controlling system 1 comprises a redundant power supply device 10, a controller 20 and a power demanding device 30, wherein the redundant power supply device 10 electrically connects to the power demanding device 30 by the controller 20.

The redundant power supply device 10 comprises a plurality of power supply units. As the embodiment shown in FIG. 1, the redundant power supply device 10 comprises two power supply units 101a and 101b. In another embodiment, the control method for this disclosure is also able to be applied to a redundant power supply device with five or other quantities of power supply units. Additionally, there is a largest operation power supplied by each of the power supply units, wherein the largest supplied power of the redundant power supply device is the total number of the power supply units minus one and then times the watt value from the largest operation power at most. For example, if the largest operation power for every redundant power supply device is 1200 watts in the embodiment shown in FIG. 1, the largest supplied power for the redundant power supply device 10 is (2-1)*1200 watts. Thus, the largest supplied power of the redundant power supply device 10 is 1200 watts. On the other hand, if the largest supplied power for redundant power supply device with five power supply units is (5-1)*1200 watts, the largest supplied power is 4800 watts.

The controller 20 is such as a chassis management controller (CMC) or a rack management controller (RMC). The controller 20 is able to be separately connected to the redundant power supply device 10 and the power demanding device 30 by a power management bus (PMBus), for detecting and calculating a required electrical power value of the power demanding device 30 and then executing the control of the redundant power supply device 10 based on the control method proposed in this disclosure. Moreover, the power demanding device 30 is such as a server or other high level computer.

Please refer to both of the FIG. 1 and FIG. 2 for illustrating the control method of the redundant power supply device 10 disclosed in this disclosure, wherein FIG. 2 is the flowchart of the control method. For the step S11 in FIG. 2, the controller 20 detects and calculates the required electrical power value of the power demanding device 30. For the step S13, the controller 20 determines an operation quantity of the power supply units 101a and 101b according to the required electrical power value and efficient operation data, namely, the quantity of the power supply units 101a and 101b required to be turned on, and a control command is generated based on the above operation quantity. For the step S15, the controller 20 selectively outputs the control command to the redundant power supply device 10 so as to control the redundant power supply device 10 based on said control command. In an embodiment, for implementation of controlling the redundant power supply device 10 to achieve the result of dynamic control, the controller 20 is able to detect the required electrical power value from the power demanding device 30 with a preset frequency for determining the operation quantity of the power supply units 101a and 101b.

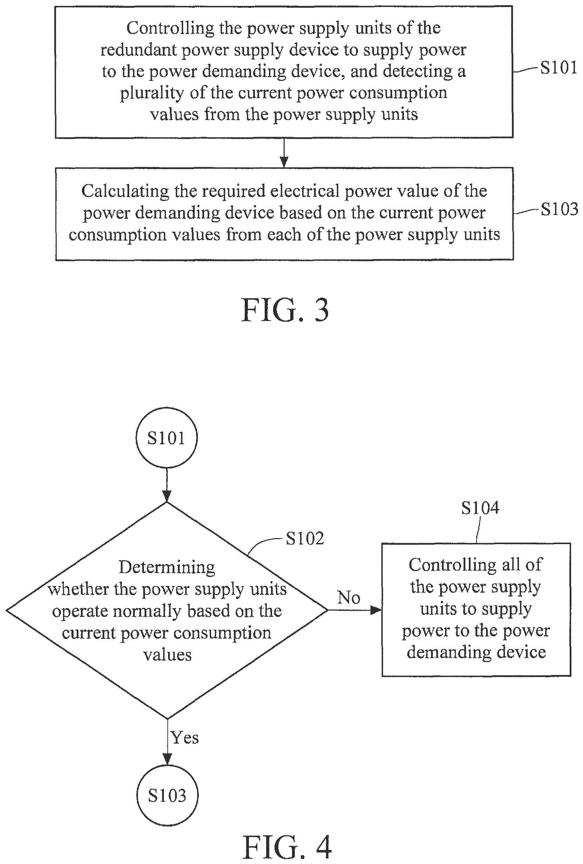

For illustrating the step S11 in FIG. 2 particularly, please refer to FIG. 1, FIG. 2 and FIG. 3 together, wherein FIG. 3 is the detailed flowchart for the step S11 in FIG. 2 in an embodiment based on this disclosure. For the step S101, the controller 20 is able to control the power supply units 101a and 101b of the redundant power supply device 10 to supply power to the power demanding device 30. Also, the controller 20 detects a plurality of the current power consumption values from the power supply units 101a and 101b. For the step S103, the controller 20 calculates the required electrical power value of the power demanding device 30 based on the current power consumption values from each of the power supply units 101a and 101b. For instance, the controller 20 is able to calculate the total current power consumption values from the power supply units 101a and 101b for being the required electrical power value of the power demanding device 30. Moreover, for calculating the required electrical power value from the power demanding device 30, the controller 20 is able to set each of the power supply units 101a and 101b with different weightings. Furthermore, there is no limitation on the weightings in this disclosure.

In another embodiment, please refer to FIG. 1, FIG. 3 and FIG. 4, wherein FIG. 4 is the detailed flowchart of the control method for the redundant power supply device 10 for another embodiment based on this disclosure. In this embodiment, after the controller 20 detects the current power consumption values from each of the power supply units 101a and 101b of the redundant power supply device 10 (shown as the step S101 in FIG. 3), the controller 20 determines whether the power supply units 101a and 101b operate normally based on the current power consumption values (shown as the step S102). For instance, when the power supplying weightings of the power supply units 101a and 101b are the same, the current power consumption values of the power supply units 101a and 101b should be the same, too. In this condition, if the current power consumption values of the power supply units 101a and 101b detected by the controller 20 are obviously different, the power supply units 101a and 101b operate abnormally. For the step S104, controller 20 controls all of the power supply units 101a and 101b to supply power to the power demanding device 30 when one of the power supply units 101a and 101b operates abnormally. In other words, the dynamic control method is stopped when the controller 20 determines the redundant power supply device 10 operates abnormally. On the other hand, when the controller 20 determines both of the power supply units 101a and 101b operate normally, the controller 20 keeps calculating the required electrical power value for the power demanding device 30 (shown as the step S103 in FIG. 3).

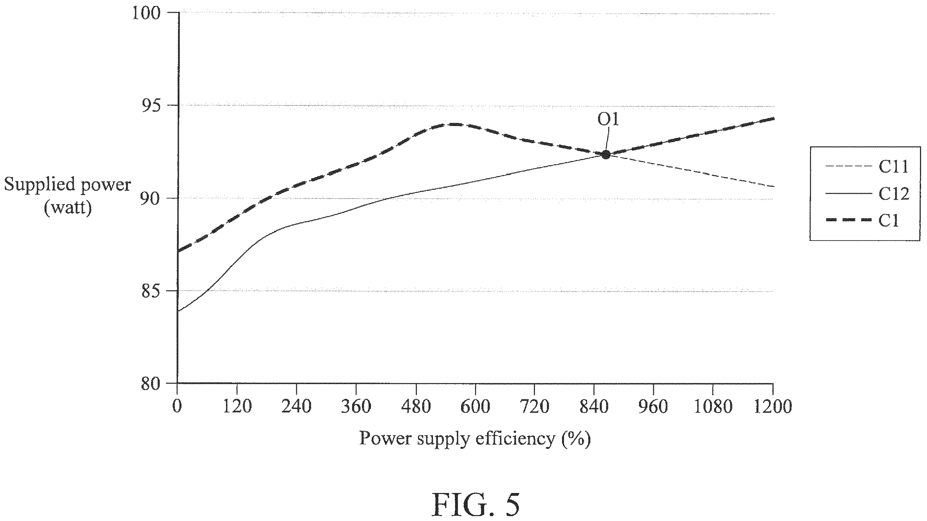

After obtaining the required electrical power value from the power demanding device 30, the controller 20 determines the value of an operation quantity of the power supply units 101a and 101b based on the required electrical power value and the efficient operation data, such as the description shown in the step S13 in FIG. 2. For further description of this step, please refer FIG. 1, FIG. 2 and FIG. 5, wherein FIG. 5 is the schematic of the efficient operation data for an embodiment based on this disclosure. As the descriptions mentioned above, the controller 20 determines the value of an operation quantity of the power supply units 101a and 101b according to the required electrical power value and the efficient operation data, wherein the efficient operation data indicates the relationship between the supplied power of the redundant power supply device 10 and the operation quantity of the power supply units 101a and 101b. Also, the relationship is associated with the power supply efficiency of the redundant power supply device 10. Specifically, the efficient operation data may be saved in the memory of the controller 20 beforehand. As FIG. 5 shows, the formation of the efficient operation data may be the efficient curve C1 with the x-axis showing "supplied power" and the y-axis showing "power supply efficiency". In addition, each of the points on the efficient curve C1 comprises the corresponding operation quantity. FIG. 5 schematically shows the efficient curve C1 corresponding to the redundant power supply device 10 with two power supply units 101a and 101b.

Particularly, the efficient curve C1 is composed of a part of the first situation efficiency curve C11 and a part of the second situation efficiency curve C12. Additionally, the first situation efficiency curve C11 indicates the relationship between the supplied power and the power supply efficiency of the redundant power supply device 10 when one of the power supply units 101a and 101b is turned on. Also, the second situation efficiency curve C12 indicates the relationship between the supplied power and the power supply efficiency of the redundant power supply device 10 when all of the power supply units 101a and 101b are turned on. The efficient curve C1 is composed of parts of at least one of the first situation efficiency curve C11 and the second situation efficiency curve C12, wherein each of the parts has the maximum efficiency value between the first situation efficiency curve C11 and the second situation efficiency curve C12. In this embodiment, for the efficient curve C1, the supplied power corresponding to the cross point O1 serves as the switching threshold, wherein the parts from the first situation efficiency curve C11 and the second situation efficiency curve C12 meet at the cross point O1. When the required electrical power value of the power demanding device 30 is changed from less to more than the switching threshold, the operation quality of the power supply units 101a and 101b is changed from one to two.

In another embodiment, the efficient operation data may be saved as a table format in the memory of the controller 20. Additionally, the way to generate the table is similar to the way to generate the efficient curve descripted above. Please refer to Table 1 shown as the follows for specific description. The first column of Table 1 comprises a plurality of the power supplying ranges generated by dividing the total range from zero to the largest supplied power of the redundant power supply device 10 by a preset interval. In this embodiment, the largest supplied power is 1200 watts and the preset interval is 120 watts. However, this disclosure has no limitation to the parameters in practice. The second column of Table 1 comprises a plurality of first situation efficiency values, wherein each of the first situation efficiency values indicates the power supply efficiency of the redundant power supply device 10 when one of the power supply units 101a and 101b is turned on to supply the power value in the corresponded power supplying range (the corresponding power supplying range is at the same row in Table 1). The third column comprises a plurality of second situation efficiency values, wherein each of the second situation efficiency values indicates the power supply efficiency of the redundant power supply device 10 when two of the power supply units 101a and l0l b are turned on to supply the power value in the corresponded power supplying range. The fourth column indicates the maximum efficiency value of the first situation efficiency value and the second situation efficiency value in the same power supplying range. The fifth column indicates the operation quantity of the power supply units 101a and 101b corresponding to the maximum efficiency value shown in the fourth column.

**Table 1**

| Power supplying range (watt) | First situation efficiency value (%) | Second situation efficiency value (%) | The largest efficient value (%) | Operation quantity (number) |
|---|---|---|---|---|
| 0∼120 | 88.00 | 85.00 | 88.00 | 1 |
| 121∼240 | 90.00 | 88.00 | 90.00 | 1 |
| 241∼360 | 91.30 | 89.00 | 91.30 | 1 |
| 361∼480 | 92.60 | 90.00 | 92.60 | 1 |
| 481∼600 | 94.00 | 90.65 | 94.00 | 1 |
| 601∼720 | 93.40 | 91.30 | 93.40 | 1 |
| 721∼840 | 92.80 | 91.95 | 92.80 | 1 |
| 841∼960 | 92.20 | 92.60 | 92.60 | 2 |
| 961∼1080 | 91.60 | 93.30 | 93.30 | 2 |
| 1081∼1200 | 91.00 | 94.00 | 94.00 | 2 |

In this embodiment, the table saved in the controller 20 may comprise the first column and the fifth column only, or further comprise the fourth column in addition to the first and fifth columns from Table 1. Moreover, the efficient curve C1 mentioned in the above embodiment may be drawn based on the data from the first column and the fourth column.

In short, in an embodiment, the control method of the redundant power supply device 10 may further comprise obtaining the first situation efficiency value and the second situation efficiency value which are both mentioned above. When the first situation efficiency value is larger than the second situation efficiency value, the controller 20 generates the efficient operation data comprising the operation quantity corresponding to the first situation efficiency value (first value) and the associated power supplying range. When the second situation efficiency value is larger than the first situation efficiency value, the controller 20 generates the efficient operation data comprising the operation quantity corresponding to the second situation efficiency value (second value) and the associated power supplying range.

The above embodiment is an example for controlling the redundant power supply device 10 with two power supply units 101a and 101b. However, the control method in this disclosure may also be applied to the redundant power supply device with more than two power supply units. For instance, for the redundant power supply device with three power supply units, the method for generating the efficient operation data includes comparing the efficient value between three situations (turning on one, two or three power supply units), and saving the operation quantity associated with the maximum efficient value in the efficient operation data. Also, the method may be applied to the redundant power supply device comprising other quantities of the power supply units in the same way. The above method for generating the efficient operation data may be performed by the controller 20; alternatively, the method may be performed by an external processor before the memory of the controller 20 saves the efficient operation data.

Furthermore, as the prior arts mentioned in the background section, the conventional method for controlling the redundant power supply device is turning on all of the power supply units in the device. Hence, when the conventional method is applied to the controller 20 controlling the redundant power supply device 10 with two power supply units 101a and 101b, the power supply efficiency approximates to the second situation efficiency value mentioned above (the third column in Table 1). On the contrary, the control method in this disclosure is able to control the value of the operation quantity of the power supply units 101a and 101b dynamically according to the required electrical power value of the power demanding device 30. Thus, the power supply efficiency (the fourth column in Table 1) is improved by this control method.

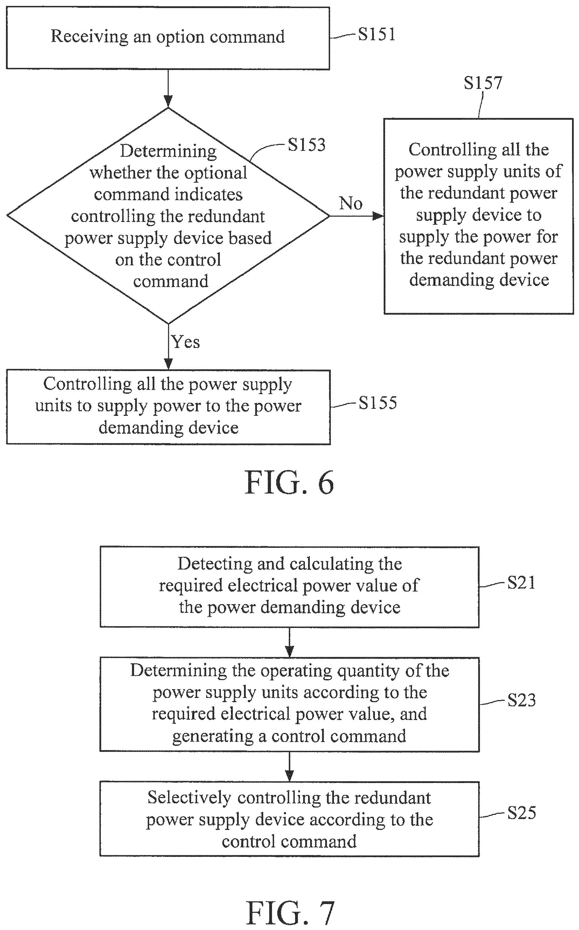

For describing the step S15 in FIG. 2 specifically, please refer to FIG. 1, FIG. 2 and FIG. 6, wherein FIG. 6 is the detailed flowchart for the step S15 in FIG. 2 in an embodiment based on this disclosure. The step S15 in FIG. 2 comprises the steps S151 to S157 in FIG. 6. In the steps S151 to S157, the controller 20 receives an option command and determines the information of the option command, wherein the option command may be the setting of the basic input/output system (BIOS). As the step S155 shown, when the option command indicates controlling the redundant power supply device 10 according to the control command, the controller 20 outputs the control command to the redundant power supply device 10 for controlling the redundant power supply device 10 based on the control command. On the contrary, as the step S157 shown, when the option command indicates not controlling the redundant power supply device 10 based on the control command, the controller 20 generates another control command to control all of the power supply units 101a and 101b to supply power to the power demanding device 30.

In another embodiment, in the time period that the controller 20 performs said dynamic control method in the above embodiments, the controller 20 is able to detect the operation parameters in said time period (such as the voltage, current and temperature) from the redundant power supply device 10 by a plurality of pins. Moreover, the controller 20 performs a warning signal when the abnormal conditions (such as under voltage, over current or over temperature in the device) are occurred. In this embodiment, the step S15 in FIG. 2 includes, by the controller 20, determining whether a warning signal is occurred. Specifically, the controller 20 controls the redundant power supply device 10 according to the control command when the warning signal is not occurred, and the controller 20 controls all of the power supply units 101a and 101b to supply power to the power demanding device 30 when the warning signal is occurred. In another embodiment, during the execution of the steps S11 to S15 of the dynamic control method, once the warning signal is occurred, the controller 20 may stop the dynamic control method immediately and apply the control method turning on all of the power supply units 101a and 101b of the redundant power supply device 10.

All of the above embodiments are based on the redundant power supply device 10 with two power supply units 101a and 101b, but the control method in this disclosure is also applied to the redundant power supply device 10 with more than two power supply units. For describing the proposed method by algebra, please refer to FIG. 1 and FIG. 7, wherein FIG. 7 is the flowchart for the control method of the redundant power supply device in another embodiment based on this disclosure. The control method in this embodiment is able to be implemented by the control system with the redundant power supply device, the controller, and the power demanding device. Moreover, the types of the elements mentioned above and the connections between each other are similar to the control system shown in FIG. 1, so the elements are not illustrated again in this section. The control method shown in FIG. 7 is applied to the redundant power supply device with N power supply units, wherein N is a natural number. Also, each of the power supply units comprises the largest operation power of W watt, wherein W is a non-negative integer. As a result, the largest supplied power of said redundant power supply device is W*(N-1) watt at most.

For the step S21 in FIG. 7, the controller detects and calculates the required electrical power value of the power demanding device. On the other hand, the detailed process is similar to the step S11 in FIG. 2 descripted above, thus identical descriptions are not illustrated again in this section. For the step S23, the controller determines the operation quantity of the power supply units according to the obtained required electrical power value and the switching threshold, wherein the operation quantity means the required number for the power supply units must be turned on, and the controller generates the control command according to the operation quantity of the power supply units. The switching threshold is between W*M watt and W*(M+1) watt, wherein M is a non-negative integer, and M is the same as (N-2) or less than (N-2). When the required electrical power value of the power supply units is changed from less than the switching threshold to more than the switching threshold, the controller determines the value of the operation quantity to be changed from (M+1) to (M+2). Particularly, the switching threshold is 50% to 80% of W when M equals to zero. For the step S25, the controller selectively outputs the control command generated in the step S23 to the redundant power supply device, and the controller controls the redundant power supply device based on the control command. On the other hand, the detailed process is similar to the step S15 in FIG. 2 descripted above, so it doesn't need to be illustrated again. Moreover, in an embodiment, when each of the power supply units of the redundant power supply device comprises different efficiency levels (such as copper, silver, gold, platinum or titanium level), according to the determined operating quality, the controller 20 firstly turns on the power supply units with the preferable efficiency level for keeping the total power supply efficiency of the redundant power supply device being optimum.

As the structure mentioned above, the control method applied to the redundant power supply device is disclosed in this disclosure. Said control method is able to dynamically determine the value of the operation quantity of the power supply unit of the redundant power supply device based on the required electrical power value of the power demanding device and the efficient operation data. Also, the control method is able to dynamically determine the value of the operation quantity of the power supply unit based on the required electrical power value and the switching threshold. Thus, the redundant power supply device keeps operating under the optimum power supply efficiency, and the electrical power consumption is decreased by this control method.

The embodiments depicted above and the appended drawings are exemplary and are not intended to be exhaustive or to limit the scope of the present disclosure to the precise forms disclosed. Many modifications and variations are possible in view of the above teachings.

## Claims

1. A control method applied to a redundant power supply device 10, with the redundant power supply device 10 connected to a power demanding device 30 and comprising a plurality of power supply units 101a and 101b, with said control method comprising:
detecting and calculating a required electrical power value of the power demanding device 30;
determining an operation quantity of the power supply units 101a and l0l b according to the required electrical power value and a plurality of efficient operation data for generating a control command, and
selectively controlling the redundant power supply device 10 according to the control command;
wherein the plurality of efficient operation data indicates a relationship between supplied power of the redundant power supply device 10 and the operation quantity of the power supply units 101a and 101b, and the relationship is associated with a power supply efficiency of the redundant power supply device 10.

2. The control method according to claim 1, further comprising:
obtaining a first situation efficiency value indicating the power supply efficiency of the redundant power supply device 10 when the redundant power supply device 10 operates in a power supplying range and the operation quantity of the power supply units 101a and 101b is a first value;
obtaining a second situation efficiency value indicating the power supply efficiency of the redundant power supply device 10 when the redundant power supply device 10 operates in the power supplying range and the operation quantity of the power supply units 101a and 101b is a second value; and
generating the plurality of efficient operation data comprising the first value and the power supplying range corresponding thereto when the first situation efficiency value is larger than the second situation efficiency value.

3. The control method according to claim 1, wherein detecting and calculating the required electrical power value of the power demanding device 30 comprises:
controlling the power supply units 101a and 101b to supply power to the power demanding device 30, and detecting a plurality of current power consumption values of the power supply units; and
selectively calculating the required electrical power value of the power demanding device 30 based on the current power consumption values.

4. The control method according to claim 3, wherein selectively calculating the required electrical power value of the power demanding device 30 based on the current power consumption values comprises:
determining whether the power supply units 101a and 101b operate normally based on the current power consumption values;
calculating the required electrical power value of the power demanding device 30 based on the current power consumption values when the power supply units 101a and 101b operate normally; and
controlling all of the power supply units 101a and 101b to supply power to the power demanding device 30 when one of the power supply units 101a and 101b operates abnormally.

5. The control method according to claim 1, wherein selectively controlling the redundant power supply device 10 according to the control command comprises:
receiving an option command;
controlling the redundant power supply device 10 according to the control command when the option command indicates controlling the redundant power supply device 10 based on the control command; and
controlling all of the power supply units 101a and 101b to supply power to the power demanding device 30 when the option command indicates not controlling the redundant power supply device 10 based on the control command.

6. The control method according to claim 1, wherein selectively controlling the redundant power supply device 10 according to the control command comprises:
determining whether a warning signal is occurred;
controlling the redundant power supply device 10 according to the control command when the warning signal is not occurred; and
controlling all of the power supply units 101a and 101b to supply power to the power demanding device 30 when the warning signal is occurred.

7. The control method according to claim 1, further comprising: controlling all of the power supply units 101a and 101b to supply power to the power demanding device 30 based on a warning signal.

8. A control method applied to a redundant power supply device 10 with N power supply units 101a and 101b and connecting to a power demanding device 30, wherein each of the power supply units 101a and l0l b comprises a largest operation power of W watts, and the control method comprises:
detecting and calculating a required electrical power value of the power demanding device 30;
generating a control command according to an operation quantity of the power supply units 101a and 101b, with said operation quantity determined based on the required electrical power value and a switching threshold; and
selectively controlling the redundant power supply device 10 based on the control command;
wherein the switching threshold is between M times of W watt and (M+1) times of W watt, and the value of the operation quantity changes from (M+1) to (M+2) when the required electrical power value is changed from less than the switching threshold to more than the switching threshold, wherein M is a non-negative integer.

9. The control method according to claim 8, wherein the switching threshold is 50% to 80% of W when M is zero.

10. The control method according to claim 8, wherein detecting and calculating the required electrical power value of the power demanding device 30 comprises:
controlling the power supply units 101a and 101b to supply power for the power demanding device 30, and detecting a plurality of current power consumption values of the power supply units 101a and 101b; and
selectively calculating the required electrical power value of the power demanding device 30 based on the current power consumption values.

11. The control method according to claim 10, wherein selectively calculating the required electrical power value of the power demanding device 30 based on the current power consumption values comprises:
determining whether the power supply units 101a and 101b operate normally based on the current power consumption values;
calculating the required electrical power value of the power demanding device 30 when the power supply units 101a and 101b operate normally; and
controlling all of the power supply units 101a and 101b to supply power to the power demanding device 30 when one of the power supply units 101a and 101b operates abnormally.

12. The control method according to claim 8, wherein selectively controlling the redundant power supply device 10 according to the control command comprises:
receiving an option command;
controlling the redundant power supply device 10 according to the control command when the option command indicates the redundant power supply device 10 based on the control command; and
controlling all of the power supply units 101a and 101b to supply power to the power demanding device 30 when the option command does not indicate the redundant power supply device 10 based on the control command.

13. The control method according to claim 8, wherein selectively controlling the redundant power supply device 10 according to the control command comprises:
determining whether a warning signal is occurred;
controlling the redundant power supply device 10 according to the control command when the warning signal is not occurred; and
controlling all of the power supply units 101a and 101b to supply power to the power demanding device 30 when the warning signal is occurred.

14. The control method according to claim 8, further comprising controlling the power supply units 101a and 101b to supply power to the power demanding device 30 according to a warning signal.
